Europäisches Patentamt

(19) European Patent Office

Office européen des brevets

(11) Publication number: **0 309 045 B1**

(12) **EUROPEAN PATENT SPECIFICATION**

(45) Date of publication of patent specification:
23.10.91 Bulletin 91/43

(51) Int. Cl.⁵: **B01J 27/188, C10G 45/08**

(21) Application number: 88202018.3

(22) Date of filing: 14.09.88

(54) **Hydrotreating catalysts from hydrogels, process for the preparation and use thereof.**

(30) Priority: 24.09.87 US 100661
24.09.87 US 100662
24.09.87 US 100659

(43) Date of publication of application:
29.03.89 Bulletin 89/13

(45) Publication of the grant of the patent:
23.10.91 Bulletin 91/43

(84) Designated Contracting States:
AT BE DE ES FR GB IT LU NL SE

(56) References cited:
EP-A- 0 266 009
EP-A- 0 266 011
US-A- 4 456 699

(73) Proprietor: SHELL INTERNATIONALE
RESEARCH MAATSCHAPPIJ B.V.
Carel van Bylandtlaan 30
NL-2596 HR Den Haag (NL)

(72) Inventor: Kemp, Richard Alan
11510 Chariot
Stafford Texas 77477 (US)

(74) Representative: Spierenburg, Jan et al
Shell Internationale Research Maatschappij
B.V. Patents, Licensing & Trade Marks
Division P.O. Box 302
NL-2501 CH The Hague (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention relates to a process for preparing highly active alumina hydrogel-derived catalysts, and to catalysts thus prepared.

In the catalytic processing of petroleum feedstocks, it is often desirable to alter the pore structure of the catalyst in order to accommodate different types of feeds. For example, when processing feedstocks with no metals or with a low metals content, it may be technically and economically desirable to use narrow-pore catalysts. On the other hand, when processing feedstocks of high metals content, the metals tend to deposit rapidly on the catalyst surface and plug the pores of conventional hydroprocessing catalysts, resulting in a loss of catalytic activity for sulphur and nitrogen removal. In order to maintain hydrotreating activity, it is necessary that the catalyst be high in surface area. To facilitate the diffusion of large components into and out of the catalyst and to prevent surface deposits of coke and metals, large pore diameters are required. These criteria necessitate the use of bimodal catalysts which have high surface areas and a significant fraction of pore volume in large pores. The large pores allow enhanced diffusion of large molecules into the catalyst while the smaller pores, providing most of the surface area, allow for hydroprocessing of the feed. Catalysts of this type can be used as hydrotreating catalysts, especially for residue/demetallization applications.

The present invention thus relates to a process for preparing highly active hydrotreating catalysts having surface areas of at least 300 m²/g, at least 20% of the pore volume in pores having diameters greater than 35 nm and at least 20% of the pore volume in pores having diameters less than 7 nm, which process comprises:

(a)     titrating an aqueous solution of one or more aluminium salt(s) with a titrating agent, thereby forming a precipitate,

(b)     ageing the precipitate at a temperature ranging from 20°C to 90°C for at least 15 minutes at a pH ranging from 8.0 to 12.0,

(c)     washing the precipitate,

(d)     mixing the precipitate with one or more compounds, of an element selected from the group consisting of nickel, cobalt, and mixtures thereof, and of a heavy metal selected from the group consisting of molybdenum, tungsten, and mixtures thereof, at a pH in the range between 4.0 and 9.0 and a temperature in the range between 25°C and 100°C until adsorption of the compounds onto the gel is sufficient to yield a final catalyst having from 1%w to 5%w cobalt and/or nickel and from 8%w to 32%w heavy metal,

(e)     partially drying the product of step (d) to reduce loss on ignition to between 50% and 70%,

(f)     extruding the product of step (e), and

(g)     drying and calcining the product of step (f) at a temperature ranging from 300°C to 900°C.

It has been found that hydrogel-derived catalysts prepared according to the process of the present invention have activities equal to or better than catalysts prepared by conventional techniques when compared on a metals efficiency basis while having densities significantly lower than conventionally prepared catalysts. Two of the major advantages of the hydrogel route are higher metals utilization and lower cost of catalyst manufacture relative to conventionally prepared catalysts. The catalysts prepared according to the process according to the present invention have high surface areas, at least 300 m²/g ; at least 20% of the pore volume located in pores having diameters greater than 35 nm ; and at least 20% of the pore volume located in pores having diameters less than 7 nm. These catalysts are particularly suitable for residue/demetallization applications.

The present invention also relates to the use of catalysts prepared according to the process of the present invention to hydrotreat hydrocarbon feedstocks.

In the process according to the present invention, a highly active hydrotreating catalyst is prepared by incorporating a compound of an element selected from the group consisting of nickel, cobalt and mixtures thereof, and of a heavy metal selected from the group consisting of molybdenum, tungsten and mixtures thereof, and optionally a phosphorus-containing compound into a (phosphated) alumina hydrogel-derived support prepared by titrating an aqueous solution of an acid aluminium salt with an aqueous solution of a basic aluminium compound in the presence or absence of a phosphorus-containing compound.

The (phosphated) alumina hydrogel can be prepared by titrating an aqueous solution of one or more aluminium salt(s) with an appropriate acidic or basic material or solution in the presence or absence of a phosphorus-containing compound to cause precipitation of the (phosphated) alumina gel. The (phosphated) alumina gel can be prepared by titrating an acidic aluminium salt such as, for example, aluminium sulphate, aluminium nitrate, or aluminium chloride, in aqueous solution with a basic precipitating medium such as, for example, sodium hydroxide or ammonium hydroxide optionally in the presence of a phosphorus-containing compound, or, by titrating an alkali metal aluminate such as, for example, sodium aluminate or potassium aluminate, in aqueous solution with an acidic precipitating medium such as, for example, hydrochloric acid or nitric acid

2

optionally in the presence of a phosphorus-containing compound. If the pH of an aluminium-containing solution is adjusted to between 5.5 and 10.0 the aluminium will suitably precipitate as aluminium hydroxide or hydrated aluminium oxide.

In a preferred embodiment, the (phosphated) alumina hydrogel is prepared by titrating an aqueous solution of an alkali metal aluminate and an aqueous solution of an acid aluminium salt in the presence or absence of a phosphorus-containing compound to cause precipitation of the (phosphated) alumina gel. Suitable acidic aluminium salts include aluminium sulphate, aluminium nitrate and aluminium chloride. A preferred species is aluminium sulphate. Suitable alkali metal aluminates are sodium aluminate and potassium aluminate. The precipitation can be carried out by adding an aqueous solution of the basic aluminium species to an aqueous solution of the acidic aluminium species or the procedure can be reversed by adding an aqueous solution of the acidic aluminium species to an aqueous solution of the basic aluminium species (referred to as "sequential precipitation"). Preferably, the precipitation in the process according to the present invention is carried out by simultaneously adding the acidic aluminium species and the basic aluminium species, at least one of which has a phosphorus-containing compound dissolved therein to cause precipitation of the hydrogel (referred to as "simultaneous precipitation").

As used herein, the term "a phosphorus-containing compound" is generic and refers to one phosphorus-containing compound as well as more than one phosphorus-containing compound. The phosphorus-containing compound suitably comprises phosphoric acid, a phosphate salt or a mixture thereof. Suitable phosphate salts include alkali metal phosphates, alkali metal hydrogen phosphates, ammonium phosphate and ammonium hydrogen phosphate. The phosphorus-containing compound is preferably phosphoric acid and is preferably mixed with the acidic aluminium species prior to precipitation. Alternatively, the phosphorus-containing compound can be sodium or ammonium phosphate and mixed with the basic aluminium species prior to precipitation. The phosphorus-containing compound can also be added as a separate solution or added to both the acidic aluminium species and the basic aluminium species without significantly affecting the results. In a preferred embodiment, the phosphorus-containing compound is commercially available 85% phosphoric acid although other phosphorus-containing materials may be utilized. The amount of phosphorus-containing compound added to the acidic aluminium species and/or the basic aluminium species is suitably from 0.06 to 0.30 moles of phosphorus per mole of aluminium.

The temperature and pH of the precipitation are important variables in the preparation of the (phosphated) aluminas into which metals can be incorporated to form catalysts with desirable physical qualities. Changes in precipitation temperatures and pHs result in changes in porosities. In the process according to the present invention, a precipitation temperature typically ranges from 20°C to 90°C, preferably from 50°C to 85°C, more preferably from 55°C to 65°C, and a precipitation pH typically ranges between 5.5 and 10.0, preferably between 5.5 and 8.0, and more preferably between 6.0 and 7.5. The length of time required for the precipitation step is not critical, but should be sufficiently long for adequate mixing of the materials, however, not long enough for enhanced particle growth to occur.

After precipitation has taken place, the pH of the slurry is adjusted to a pH in the range from 8.0 to 12.0, preferably 9.0 to 11.0, more preferably 9.5 to 10.5, and aged at a temperature in the range from 20°C to 90°C, preferably 50°C to 85°C for at least 15 minutes. An upper limit on the length of time for ageing is not critical and is normally determined by economical considerations. Ageing times will typically range from 0.1 to 10 hours, preferably from 0.25 to 5 hours, and more preferably from 0.25 to 1 hour. In general, (phosphated) aluminas with acceptable properties are produced by holding the ageing temperature equal to the precipitation temperature.

After ageing, the slurry is washed and filtered in routine fashion to remove substantially all of the removable water-soluble salts formed during the precipitation of the hydrogel. The preferred solvent for washing is water although other solvents such as lower alkanols may be utilized.

After washing, the metals are incorporated into the hydrogel. One method for adding the metals to the hydrogel is a reslurry step in which the hydrogel is reslurried with one or more solutions containing solubilized salts of an element selected from the group consisting of nickel, cobalt and mixtures thereof, and of a heavy metal selected from the group consisting of molybdenum, tungsten and mixtures thereof, sufficient to deposit on the final catalyst from 1%w to 5%w nickel and/or cobalt and from 8%w to 18%w molybdenum or 10%w to 32%w tungsten. When mixtures of molybdenum and tungsten are utilized, the final catalyst suitably contains from 8%w to 32%w molybdenum and tungsten. The solutions may, however, contain amounts of nickel and/or cobalt and molybdenum or tungsten in excess of that required to deposit the aforesaid amounts of metals, which excess may be removed by washing or other techniques following the reslurry step. A typical solution can be prepared by combining a molybdenum and/or tungsten solution with a nickel and/or cobalt solution.

The molybdenum solution suitably comprises a water-soluble source of molybdenum oxide such as ammonium heptamolybdate or ammonium dimolybdate dissolved in water. The tungsten solution typically com-

EP 0 309 045 B1

prises ammonium metatungstate dissolved in water. Hydrogen peroxide may also be used to aid in solution preparation in some cases. A preferred method for preparing the molybdenum and the tungsten solutions comprises adding hydrogen peroxide to the solutions in the range of 0.1 to 1.0 mole of hydrogen peroxide per mole of molybdenum or tungsten, respectively. Optionally, a suitable soluble amine compound such as monoethanolamine, propanolamine or ethylenediamine may be added to the solutions in order to aid in stabilization of the solutions.

The nickel solution comprises one or more nickel salts dissolved in water. A wide range of nickel compounds are suitable, such as nickel nitrate, nickel acetate, nickel formate, nickel sulphate, nickel oxide, nickel phosphate, nickel carbonate, nickel chloride, and nickel hydroxide. Two compounds that are especially useful are nickel nitrate and nickel carbonate.

The cobalt solution comprises one or more cobalt salts dissolved in water. A wide range of cobalt compounds are suitable, such as cobalt nitrate, cobalt hydroxide, cobalt acetate, cobalt oxalate, or cobalt oxide. The preferred cobalt compound is cobalt nitrate.

In a preferred embodiment, the solutions contain a stabilizing amount of a phosphorus-containing compound. Typically, the solutions contain a phosphorus-containing compound in an amount of from 0.2 to 1.5 moles of phosphorus per mole of molybdenum or tungsten. Suitable phosphorus-containing compounds are the acids of phosphorus and their salts. Typical acids of phosphorus include phosphoric acids, phosphonic acids, phosphinic acids, phosphorus acids and the like. The phosphorus-containing compound suitably comprises phosphoric acid, a phosphate salt or a mixture thereof. Suitable phosphate salts include alkali metal phosphates, alkali metal hydrogen phosphates, ammonium phosphate and ammonium hydrogen phosphate.

As used herein, the term "phosphorus-containing compound" is generic and refers to one phosphorus-containing compound as well as more than one phosphorus-containing compound.

An alternative method for incorporating the metals into the hydrogel comprises adding one or more dry, water-soluble metal compounds of an element selected from the group consisting of nickel, cobalt and mixtures thereof, and one or more dry, water-soluble compounds of a heavy metal selected from the group consisting of molybdenum, tungsten and mixtures thereof, to the hydrogel and mixing until dissolution and adsorption of the metal compounds onto the gel is substantially complete. The compounds of nickel and/or cobalt and molybdenum and/or tungsten are added to the hydrogel in amounts sufficient to incorporate into the final catalyst from 1%w to 5%w nickel and/or cobalt and from 8%w to 18%w molybdenum or 10%w to 32%w tungsten. When mixtures of molybdenum and tungsten are utilized, the final catalyst contains 8%w to 32%w molybdenum and tungsten.

Molybdenum is generally added to the hydrogel as a dry, water-soluble source of molybdenum such as ammonium heptamolybdate or ammonium dimolybdate. Tungsten is typically added to the hydrogel as ammonium metatungstate. Nickel is preferably added to the hydrogel in the form of dry, water-soluble nickel nitrate, nickel acetate, nickel formate, nickel sulphate, nickel oxide, nickel phosphate, nickel carbonate, nickel chloride or nickel hydroxide, with nickel nitrate and nickel carbonate being preferred. Cobalt is preferably added to the hydrogel in the form of dry, water-soluble cobalt nitrate, cobalt hydroxide, cobalt acetate, cobalt oxalate or cobalt oxide, with cobalt nitrate being preferred.

In a preferred embodiment, a phosphorus-containing compound is added along with the salts to the (phosphated) hydrogel. The phosphorus-containing compound is typically added, either wet or dry, to the hydrogel in an amount ranging from 0.2 to 1.5 moles of phosphorus per mole of molybdenum or tungsten. The phosphorus-containing compound is preferably added directly to the hydrogel as phosphoric acid, a phosphate salt or a mixture thereof. Suitable phosphate salts include alkali metal phosphates, alkali metal hydrogen phosphates, ammonium phosphate and ammonium hydrogen phosphate. Alternatively, the phosphorus-containing compound and the dry nickel and/or cobalt salt can be mixed prior to addition to the (phosphated) hydrogel.

A preferred method of mixing the dry salts of nickel and/or cobalt and molybdenum and/or tungsten with the (phosphated) hydrogel comprises adding hydrogen peroxide to the mixture of dry salts and (phosphated) hydrogel in an amount ranging from 0.1 to 1.0 mole of hydrogen peroxide per mole of molybdenum and/or tungsten. Optionally, a suitable amine compound such a monoethanolamine, propanolamine or ethylenediamine may be added to the mixture of dry salts and (phosphated) hydrogel in order to aid in stabilization of the mixture of the salts and the (phosphated) hydrogel.

The dry salts of nickel and/or cobalt and molybdenum and/or tungsten and optionally, the phosphorus-containing compound are typically added to the hydrogel in the form of finely divided particles which are generally 0.15 mm or less in size. While particle size is not critical and larger particle sizes may be utilized, it is economically advantageous to use particles which are 0.15 mm or less in size.

It is also within the scope of the present invention to combine the two methods described above for adding the metals to the (phosphated) hydrogel. For example, one metal may be added to the hydrogel as a dry salt and another added in the form of a solution. Various permutations of this combination of dry salts additions

4

and metals solutions additions would be obvious to those skilled in the art.

The temperature and pH of the mixing step are both important variables in the preparation of hydrogel-derived catalysts which have acceptable densities and porosities. The mixing of the hydrogel with metal solutions or dry salts is typically carried out at a pH in the range between 4.0 and 10.0, preferably between 4.0 and 9.0, more preferably between 4.0 and 8.0, and a temperature in the range between 25°C and 100°C, preferably between 25°C and 80°C, until incorporation of the compounds into the gel is sufficient to yield a final calcined catalyst having from 1%w to 5%w nickel and/or cobalt and from 8%w to 32%w heavy metal selected from the group consisting of molybdenum, tungsten and mixtures thereof. Typically, the times for mixing the hydrogel and the metal compounds will range from 0.5 to 2 hours. Optionally, the resulting material can be washed to remove unadsorbed metals and filtered in routine fashion.

Following the addition of the metal compounds to the (phosphated) hydrogel, the resulting material is partially dried to reduce loss on ignition (LOI) to between 50% and 70%, preferably between 55% and 65%, more preferably between 55% and 60%. As used herein, "loss on ignition" is equal to the amount of volatiles present in the hydrogel divided by the amount of volatiles present in the hydrogel plus the dry weight of the hydrogel multiplied by one hundred percent. This reduction in the volatiles content of the hydrogel is critical to the formation of catalysts having at least 20% of the pore volume in pores having diameters greater than 35 nm and at least 20% of the pore volume in pores having diameters less than 7 nm. Materials which are not dried to the indicated LOIs do not produce the desired bimodal pore size distribution. In addition, materials which are too wet result in catalysts having poor physical properties and materials which are too dry cannot be extruded in a conventional manner. The partially dried material is then extruded using conventional methods such as, for example, a Bonnot extruder, dried more completely and calcined. In a preferred embodiment the partially dried material is passed through a mixing means to peptize the gel and thus form linkages before it is being extruded in a conventional way. Suitable mixing means include a work-intensive mixer such as, for example, a Readco Continuous Processor, or any other high shear, intensive work apparatus which peptizes the gel and renders the partially dried materials acceptable for conventional extrusion. Drying is accomplished by conventional means. It may be carried out by forced draft drying, vacuum drying, air drying or similar means. Drying temperatures are not critical and depend upon the particular means utilized for drying. Drying temperatures will typically range from 50°C to 150°C.

After drying, the material is calcined to produce the finished catalyst. The material may be calcined in an oxidizing or neutral atmosphere, although air is preferred. However, if binders and/or lubricants are used the material is heated in an oxygen-containing atmosphere, preferably air, in order to burn out the binders and lubricants. Calcining temperatures will typically range from 300°C to 900°C. Typically, burn-out temperatures will range from 300°C to 900°C. Drying, calcining and burn-out may be combined in one or two steps. Most frequently the calcining and/or burn-out steps are combined using an oxygen-containing atmosphere.

Certain other processing steps may be incorporated into the above-described procedure. For example, an intensive mixer-muller or a twin-screw mixer can be used to process the material prior to extrusion as indicated hereinbefore. It is also possible to pass partially dried material several times to the extruder as an alternative to passing the partially dried material through a work-intensive mixer.

The final catalysts are found to have surface areas greater than 300 m²/g, nitrogen pore volumes ranging from 0.4 to 1.2 cm³/g and with at least 20% of their mercury pore volume in pores having diameters greater than 35 nm and at least 20%, preferably 35%, of their pore volume in pores having diameters less than 7 nm. In general, the metals contents of the final catalysts range from 1%w to 5%w nickel and/or cobalt, preferably from 2.5%w to 4%w nickel and/or cobalt, and from 8%w to 18%w, preferably from 10%w to 14%w molybdenum or 10%w to 32%w, preferably from 18%w to 26%w tungsten.

The catalysts prepared according to the process of the present invention can be suitably applied to hydrocarbon conversion processes such as hydrocracking, hydrotreating, isomerization, hydrogenation, dehydrogenation, oligomerization, alkylation, dealkylation and the like.

The catalysts prepared in accordance with the present invention are most commonly employed in hydrotreating and/or hydrocracking feedstocks ranging in volatilities from naphthas to petroleum residues, including materials derived from tar sands, shale oils and the like. Reaction temperatures will typically range from 150°C to 482°C, preferably from 260°C to 450°C. Reaction pressures are generally within the range of about 14 to 242 bar, preferably from 42 bar to 175 bar. Reactions are conducted at liquid hourly space velocities within the range of 0.05 to 15 reciprocal hour.

Multiple uses of these feedstocks after treating with the catalysts of this invention are also possible. Depending on the particular feedstocks treated, suitable uses can include conversion unit feedstocks such as thermal cracking and hydrocracking, or finished products such as gasoline, diesel, airline turbine fuel, furnace oils, solvents, fuel oils and asphalts.

The process for preparing catalysts in accordance with the present invention will be further described below

5

by the following Examples which are provided for illustration and which are not to be construed as limiting the invention.

## Example I

99.0 kilograms of aluminium sulphate solution were prepared by solubilizing 11.3 kilograms of gibbsite (alpha-alumina trihydrate, 34% LOI) in 87.7 kilograms of 27% sulphuric acid at a temperature slightly above 100°C. The solution was allowed to cool to 60°C prior to use. 76.4 kilograms of sodium aluminate solution were prepared by solubilizing 28.2 kilograms of gibbsite (alpha-alumina trihydrate, 34% LOI) in 48.2 kilograms of 36% sodium hydroxide at a temperature slightly above 115°C. This solution was also allowed to cool to 60°C prior to use. These two solutions were metered under computer control into a precipitation vessel containing deionized water (140 kilograms) held at 60°C, maintaining a constant pH of 7.0 and a temperature of 60°C. The precipitation duration was fixed at 45 minutes. After the precipitation step had taken place excess sodium aluminate solution (13.5 kilograms) was added to the slurry to raise the pH to the desired ageing pH of 10.0. Total solution quantities used : acid — 66.7 kilograms, base — 54.9 kilograms. The slurry was aged for one hour at the elevated pH. The slurry was then filtered in a single step on a horizontal belt vacuum filter (0.3 m × 3.0 m) and washed with deionized water. The resulting alumina hydrogel generally had a water content between 75% and 90%, basis dry weight of alumina.

Nickel nitrate hexahydrate (197.19 g) was diluted to 1 litre with deionized water. Ammonium heptamolybdate (293.12 g) was reacted with 30% hydrogen peroxide (88.0 ml) and diluted to 1 litre using deionized water. The two solutions were combined with intensive stirring. A portion of alumina hydrogel (4000 g, 76.13% LOI — 955 grams dry weight) was reslurried with this solution and allowed to react for 2 hours at a pH of 6.0 at 80°C. The slurry was then filtered hot and washed with 2 litres of deionized water, and then sucked dry on the Buchner funnel. The catalyst hydrogel was then dried in a forced air oven at approximately 120°C until the LOI of the gel was 60.0%. The material was mulled in a Simpson mix muller for 15 minutes and was then extruded through a conventional Bonnot extruder. Drying at 120°C was followed by calcination at 510°C for two hours. The properties of the catalyst are listed in Tables I and II.

## Example II

A catalyst was prepared according to the method described in Example I except that the mixing step was carried out as follows.

Cobalt nitrate hexahydrate (248.47 g) was diluted to 500 millilitres with deionized water. Ammonium heptamolybdate (392.13 g) was reacted with 30% hydrogen peroxide (119.0 ml) and monoethanolamine (67.33 g) and diluted to 1.5 litres using deionized water. The two solutions were combined with intensive stirring. A portion of alumina hydrogel (5300 g, 75.64% LOI — 1291 grams dry weight) was reslurried with this solution and allowed to react for 2 hours at a pH of 6.0 (adjust with HCl) at 25°C. The properties of the catalyst are listed in Tables I and II.

## COMPARATIVE EXAMPLE 1

A catalyst was prepared according to the method described in Example I except that the hydrogel was not partially dried prior to the extrusion step. The properties of the catalyst are listed in Table I and II.

## COMPARATIVE EXAMPLE 2

A catalyst was prepared according to the method described in Example II except that the hydrogel was not partially dried prior to the extrusion step. The properties of the catalyst are listed in Tables I and II.

## COMPARATIVE EXAMPLE 3

A catalyst was prepared utilizing a non-hydrogel technique. The properties of this commercially available catalyst are listed in Tables I and II.

## Example III

A catalyst was prepared as described in Example I except that the mixing step was carried out as follows. Nickel nitrate hexahydrate (227.31 g) was reacted with 85% phosphoric acid (211.99 g) and diluted to 1 litre with deionized water. Ammonium heptamolybdate (340.48 g) was reacted with 30% hydrogen peroxide (100.7 ml) and monoethanolamine (57.0 g) and diluted to 1 litre using deionized water. The two solutions were combined with intensive stirring. A portion of alumina hydrogel (4900 g, 80.76% LOI — 943 grams dry weight) was reslurried with this solution and allowed to react for 2 hours at a pH of 5.5 (adjust with $NH_4OH$) at 80°C. The slurry was then filtered hot and washed with 3 litres, instead of 2 litres, of deionized water, and then sucked dry on the Buchner funnel. The properties of the catalyst are listed in Tables III and IV.

Example IV

A catalyst was prepared according to the method described in Example I except that the mixing step was carried out as follows.

Cobalt nitrate hexahydrate (146.06 g) was reacted with 85% phosphoric acid (181.31 g) and diluted to 1 litre with deionized water. Ammonium heptamolybdate (222.13 g) was reacted with 30% hydrogen peroxide (87.0 ml) and diluted to 1 litre using deionized water. The two solutions were combined with intensive stirring. A portion of alumina hydrogel (4876 g, 81.79% LOI — 888 grams dry weight) was reslurried with this solution and allowed to react for 2 hours at a pH of 5.5 (adjust with $NH_4OH$) at 25°C. The slurry was then filtered and washed with 3 litres instead of 2 litres, of deionized water, and then sucked dry on the Buchner funnel. The properties of the catalyst are listed in Tables III and IV.

COMPARATIVE EXAMPLE 4

A catalyst was prepared according to the method described in Example III except that the hydrogel was not partially dried prior to the extrusion step. The properties of the catalyst are listed in Tables III and IV.

COMPARATIVE EXAMPLE 5

A catalyst was prepared according to the method described in Example IV except that the hydrogel was not partially dried prior to the extrusion step. The properties of the catalyst are listed in Tables III and IV.

COMPARATIVE EXAMPLE 6

A catalyst was prepared utilizing a non-hydrogel technique. The properties of this commercially available catalyst are listed in Tables III and IV.

Example V

102.5 kilograms of aluminium sulphate/phosphoric acid solution were prepared by solubilizing 11.2 kilograms of gibbsite (alpha-alumina trihydrate, 34% LOI) in 88.3 kilograms of 27% sulphuric acid and adding 3.0 kilograms of 85% phosphoric acid at a temperature slightly above 100°C. The solution was allowed to cool to 60°C prior to use. 75.3 kilograms of sodium aluminate solution were prepared by solubilizing 28.0 kilograms of gibbsite (alpha-alumina trihydrate, 34% LOI) in 47.3 kilograms of 36% sodium hydroxide at a temperature slightly above 115°C. This solution was also allowed to cool to 60°C prior to use. These two solutions were metered under computer control into a precipitation vessel containing deionized water (162 kilograms) held at 60°C, maintaining a constant pH of 7.0 and a temperature of 60°C. The precipitation duration was fixed at 45 minutes. After precipitation had taken place excess sodium aluminate solution (14.0 kilograms) was added to the slurry to raise the pH to the desired ageing pH of 10.0. Total solution quantities used : acid — 73.5 kilograms, base — 64.0 kilograms. The slurry was aged for one hour at the elevated pH. The slurry was then filtered in a single step on a horizontal belt vacuum filter (0.3 m × 3.0 m) and washed with deionized water. The resulting phosphated alumina hydrogel generally had a water content between 75% and 90%, basis dry weight of alumina.

Nickel nitrate hexahydrate (190.89 g) was reacted with 85% phosphoric acid (33.34 g) and diluted to 1 litre with deionized water. Ammonium heptamolybdate (307.03 g) was reacted with 30% hydrogen peroxide (91 ml) and monoethanolamine (51.3 g) and diluted to 1 litre using deionized water. The two solutions were combined with intensive stirring. A portion of phosphated alumina hydrogel (6634 g, 85.51% LOI — 961 grams dry weight) was reslurried with this solution and allowed to react for 2 hours at a pH of 5.5 (adjust with HCl) at 80°C. The slurry was then filtered hot and washed with 2 litres of deionized water, and then sucked dry on the Buchner funnel. The catalyst hydrogel was then dried in a forced air oven at approximately 120°C until the LOI of the gel was 62.5%. The material was mulled in a Simpson mix muller for 15 minutes, then passed through a conventional Bonnot extruder. Drying at 120°C was followed by calcination at 510°C for two hours. The properties of the catalyst are listed in Tables V and VI.

Example VI

A catalyst was prepared according to the method described in Example V except that no phosphoric acid was added to the metals solution. The properties of the catalyst are listed in Tables V and VI.

Example VII

A catalyst was prepared according to the method described in Example V except that the mixing step was carried out as follows.

Cobalt nitrate hexahydrate (163.24 g) was reacted with 85% phosphoric acid (25.53 g) and diluted to 1 litre with deionized water. Ammonium heptamolybdate (329.47 g) was reacted with 30% hydrogen peroxide (97 ml) and monoethanolamine (55.1 g) and diluted to 1 litre using deionized water. The two solutions were combined with intensive stirring. A portion of phosphated alumina hydrogel (6634 g, 85.51% LOI—961 grams dry weight) was reslurried with this solution and allowed to react for 2 hours at a pH of 5.0 (adjust with HCl) at 25°C. The properties of the catalyst are listed in Tables V and VI.

Example VIII

A catalyst was prepared according to the method described in Example VII except that no phosphoric acid was added to the metals solution. The properties of the catalyst are listed in Table V and VI.

COMPARATIVE EXAMPLE 7

A catalyst was prepared according to the method described in Example V except that the materials were not partially dried prior to extrusion. The properties of the catalyst are listed in Tables V and VI.

COMPARATIVE EXAMPLE 8

A catalyst was prepared according to the method described in Example VII except that the materials were not partially dried prior to extrusion. The properties of the catalyst are listed in Tables V and VI.

COMPARATIVE EXAMPLE 9

A catalyst was prepared utilizing a non-hydrogel technique. The properties of this commercially available catalyst are listed in Tables V and VI.

CATALYST TESTING

Catalyst samples were used to hydrotreat a catalytically-cracked heavy gas oil (CCHGO) in a trickle-flow reactor. Ten ml of the appropriate extruded catalyst were crushed and sieved to 0.3-1.0 mm (16-45 mesh), diluted with silicon carbide, and loaded into a typical trickle-flow reactor tube. The catalyst was presulphided with a 5% $H_2S/H_2$ (v/v) gas mixture at 371°C for 2 hours prior to testing. A CCHGO was passed over the catalyst at 358°C and a partial hydrogen pressure of 59 bar with a $H_2$/oil ratio equal to 4.0. Measured rate constants include hydrogenation, denitrification and desulphurization and are reported relative to the non-hydrogel catalysts (Comparative Examples 3, 6 and 9 respectively) and are calculated on basis of the total metals contents of the catalyst. Specific catalyst performance characteristics are presented in Table VII.

EP 0 309 045 B1

## TABLE I
### Catalyst Properties

|  | EXAMPLE I | EXAMPLE II | COMPARATIVE EXAMPLE 1 | COMPARATIVE EXAMPLE 2 | COMPARATIVE EXAMPLE 3 |
|---|---|---|---|---|---|
| Ageing pH[a] | 10.5 | 10.7 | 11.0 – 12.0 | 11.0 – 12.0 | --- |
| Density g/ml[b] | 0.47 | 0.47 | 0.98 | 0.88 | 0.60 |
| Reslurry pH[c] | 6.0 | 6.0 | 5.5 | 6.0 | --- |
| $N_2$ Surface Area $m^2$/g[d] | 371.0 | 408.0 | 382.0 | 408.0 | 240.0 |
| $N_2$ Pore Volume ml/g[e] | 0.62 | 0.60 | 0.33 | 0.40 | --- |
| LOI Prior to Extrusion[f] | 60 | 60 | ~ 90 | ~ 90 | --- |
| %w Nickel[g] | 3.5 | --- | 4.3 | --- | 2.52 |
| %w Cobalt[g] | --- | 2.7 | --- | 2.6 | --- |
| %w Molybdenum[h] | 11.8 | 12.4 | 17.6 | 10.0 | 12.0 |

a)-h) see explanation after Table I.

a)   Measured using an Orion 231 pH meter and Orion electrodes.

b)   209 ml volume fully settled in a graduated cup and weighed.

c)   Measured using an Orion 231 pH meter and Orion electrodes.

d)   BET (Brunauer, S., Emmet, P. Y. and Teller, E. J. Am. Chem. Soc., 60, 309-316 (1938)) by nitrogen adsorption/desorption, Micromeritics Digisorb 2500 Instrument.

e)   By nitrogen adsorption, Micromeritics Digisorb 2500 Instrument.

f)   Loss-on-ignition:  the fraction of volatile materials removed when held at 510 $^{\circ}$C for two hours, expressed as a percentage of the original weight.

g)   Weight percent determined by neutron activation analysis or atomic absorption spectroscopy.

h)   Weight percent determined by neutron activation analysis or atomic absorption spectroscopy.

i)   Determined by mercury intrusion, to 4136 bar using a Micromeritics Autopore 9210, using a 130$^{\circ}$ contact angle and 0.473 N/m surface tension of mercury.  Numbers listed are percent pore volume.

## TABLE III
### Catalyst Properties

| | EXAMPLE III | EXAMPLE IV | COMPARATIVE EXAMPLE 4 | COMPARATIVE EXAMPLE 5 | COMPARATIVE EXAMPLE 6 |
|---|---|---|---|---|---|
| Ageing pH[a] | 10.4 | 10.5 | 11.0 - 12.0 | 11.0 - 12.0 | -- |
| Density g/ml[b] | 0.47 | 0.46 | 0.72 | 0.77 | 0.60 |
| Reslurry pH[c] | 5.5 | 5.5 | 5.0 | 5.5 | -- |
| $N_2$ Surface Area $m^2$/g[d] | 364.0 | 395.0 | 428.0 | 448.0 | 240.0 |
| $N_2$ Pore Volume ml/g[e] | 0.63 | 0.73 | 0.54 | 0.49 | -- |
| LOI Prior to Extrusion[f] | 60 | 62.5 | ∼ 90 | ∼ 90 | -- |
| %w Nickel[g] | 3.4 | -- | 1.2 | -- | 2.52 |
| %w Cobalt[g] | -- | 2.3 | -- | 2.2 | -- |
| %w Molybdenum[h] | 11.0 | 8.5 | 11.8 | 7.5 | 12.0 |
| %w Phosphorus[h] | 4.7 | 4.1 | 3.4 | 2.0 | 0.0 |

a)-h) see explanation after Table I.

## TABLE II
### Catalyst Pore Size Distributions

| Hg Pore[i] Size Dist | EXAMPLE I | EXAMPLE II | COMPARATIVE EXAMPLE 1 | COMPARATIVE EXAMPLE 2 | COMPARATIVE EXAMPLE 3 |
|---|---|---|---|---|---|
| < 5 nm | 37.5 | 41.7 | 88.8 | 92.2 | 2.6 |
| 5 - 7 nm | 21.5 | 11.9 | 3.8 | 2.5 | 11.6 |
| 7 - 10 nm | 8.6 | 5.0 | 2.6 | 1.8 | 31.2 |
| 10 - 15 nm | 4.4 | 3.6 | 2.4 | 1.8 | 24.4 |
| 15 - 35 nm | 3.9 | 4.5 | 2.0 | 1.7 | 11.0 |
| > 35 nm | 24.0 | 33.4 | 0.4 | 0.0 | 19.3 |

i) see explanation after Table I.

EP 0 309 045 B1

EP 0 309 045 B1

## TABLE IV
### Catalyst Pore Size Distributions

| Hg Pore[i]) Size Dist | EXAMPLE III | EXAMPLE IV | COMPARATIVE EXAMPLE 4 | COMPARATIVE EXAMPLE 5 | COMPARATIVE EXAMPLE 6 |
|---|---|---|---|---|---|
| < 5 nm | 24.5 | 22.0 | 86.3 | 87.0 | 2.6 |
| 5 - 7 nm | 18.4 | 27.9 | 4.8 | 4.3 | 11.6 |
| 7 - 10 nm | 9.7 | 13.1 | 3.0 | 2.9 | 31.2 |
| 10 - 15 nm | 5.3 | 6.2 | 2.8 | 2.5 | 24.4 |
| 15 - 35 nm | 5.3 | 5.8 | 2.5 | 2.5 | 11.0 |
| > 35 nm | 36.7 | 24.9 | 0.7 | 0.9 | 19.3 |

i) see explanation after Table I.

EP 0 309 045 B1

## TABLE V
### Catalyst Properties

| | EXAMPLE V | EXAMPLE VI | EXAMPLE VII | EXAMPLE VIII | COMP. EXAMPLE 7 | COMP. EXAMPLE 8 | COMP. EXAMPLE 9 |
|---|---|---|---|---|---|---|---|
| Ageing pH[a] | 8.7 | 8.5 | 8.7 | 8.5 | 11.0-12.0 | 11.0 | -- |
| Density g/ml[b] | 0.52 | 0.51 | 0.48 | 0.57 | 0.72 | 0.65 | 0.60 |
| Reslurry pH[c] | 5.0 | 5.0 | 5.0 | 5.0 | 5.0 | 5.5 | -- |
| $N_2$ Surface Area $m^2$/g[d] | 337.0 | 330.0 | 314.0 | 320.0 | 428.0 | 447.0 | 240.0 |
| $N_2$ Pore Volume ml/g[e] | 0.73 | 0.64 | 0.73 | 0.59 | 0.54 | 0.56 | -- |
| LOI Prior to Extrusion[f] | 62.5 | 62.5 | 62.5 | 62.5 | ~90 | ~90 | -- |
| %w Nickel[g] | 2.6 | 2.8 | -- | -- | 1.2 | -- | 2.52 |
| %w Cobalt[g] | -- | -- | 2.1 | 2.4 | -- | 2.3 | -- |
| %w Molybdenum[h] | 11.0 | 12.0 | 12.0 | 12.0 | 11.8 | 11.8 | 12.0 |
| %w Phosphorus[h] | 3.4 | 2.2 | 3.0 | 2.4 | 3.4 | 3.7 | 0.0 |

a)-h) see explanation after Table I

TABLE VI
Catalyst Pore Size Distributions

| Hg Pore[i) Size Dist | EXAMPLE V | EXAMPLE VI | EXAMPLE VII | EXAMPLE VIII | COMPARATIVE EXAMPLE 7 | COMPARATIVE EXAMPLE 8 | COMPARATIVE EXAMPLE 9 |
|---|---|---|---|---|---|---|---|
| < 5 nm | 25.3 | 23.0 | 15.9 | 29.1 | 86.3 | 91.3 | 2.6 |
| 5 - 7 nm | 26.9 | 28.5 | 23.8 | 22.3 | 4.8 | 3.4 | 11.6 |
| 7 - 10 nm | 11.4 | 12.3 | 18.4 | 11.7 | 3.0 | 1.7 | 31.2 |
| 10 - 15 nm | 6.1 | 6.0 | 8.3 | 7.1 | 2.8 | 0.5 | 24.4 |
| 15 - 35 nm | 11.4 | 5.9 | 8.8 | 7.7 | 2.5 | 0.0 | 11.0 |
| > 35 nm | 18.9 | 27.3 | 24.7 | 22.0 | 0.7 | 3.2 | 19.3 |

i) see explanation after Table I.

EP 0 309 045 B1

EP 0 309 045 B1

## TABLE VII
### Specific Catalyst Performance

| | CCHGO (METALS BASIS) | | | NO. GRAMS METAL IN 10 ml CAT. | DENSITY G/ml | WEIGHT % | | |
|---|---|---|---|---|---|---|---|---|
| | H | N | S | | | Ni | Co | Mo |
| Example I | 1.09 | 0.71 | 1.01 | 0.710 | 0.47 | 3.5 | -- | 11.8 |
| Example II | 1.06 | 0.76 | 1.40 | 0.724 | 0.47 | -- | 2.7 | 12.4 |
| Comparative Ex. 3 | 1.00 | 1.00 | 1.00 | 0.870 | 0.60 | 2.5 | -- | 12.0 |
| Example III | 1.19 | 1.73 | 1.32 | 0.677 | 0.47 | 3.4 | -- | 11.0 |
| Example IV | 1.62 | 1.98 | 2.42 | 0.497 | 0.46 | -- | 2.3 | 8.5 |
| Comparative Ex. 6 | 1.00 | 1.00 | 1.00 | 0.870 | 0.60 | 2.5 | -- | 12.0 |
| Example V | 1.19 | 1.46 | 1.28 | 0.707 | 0.52 | 2.6 | -- | 11.0 |
| Example VII | 1.12 | 1.05 | 1.69 | 0.677 | 0.48 | -- | 2.1 | 12.0 |
| Example VIII | 0.91 | 0.75 | 1.15 | 0.821 | 0.57 | -- | 2.4 | 12.0 |
| Comparative Ex. 9 | 1.00 | 1.00 | 1.00 | 0.870 | 0.60 | 2.5 | -- | 12.0 |

## Claims

1. A process for preparing highly active hydrotreating catalysts having surface areas of at least 300 m²/g, at least 20% of the pore volume in pores having diameters greater than 35 nm and at least 20% of the pore volume in pores having diameters less than 7 nm, which process comprises :

(a) titrating an aqueous solution of one or more aluminium salt(s) with a titrating agent, thereby forming a precipitate,

(b) ageing the precipitate at a temperature ranging from 20°C to 90°C for at least 15 minutes at a pH ranging from 8.0 to 12.0,

(c) washing the precipitate,

(d) mixing the precipitate with one or more compounds of an element selected from the group consisting of nickel, cobalt, and mixtures thereof, and of a heavy metal selected from the group consisting of molybdenum, tungsten, and mixtures thereof, at a pH in the range between 4.0 and 9.0 and a temperature in the range between 25°C and 100°C until adsorption of the compounds onto the gel is sufficient to yield a final catalyst having from 1%w to 5%w cobalt and/or nickel and from 8%w to 32%w heavy metal,

(e) partially drying the product of step (d) to reduce loss on ignition to between 50% and 70%,

(f) extruding the product of step (e), and

(g) drying and calcining the product of step (f) at a temperature ranging from 300°C to 900°C.

2. A process according to claim 1, wherein step a) comprises forming a precipitate by precipitating an aqueous solution of one or more aluminium salt(s) by adjusting the pH of the solution.

3. A process according to claim 1, wherein step a) comprises forming a precipitate by titrating either an aqueous solution of an acid aluminium salt with an aqueous solution of a basic aluminium compound or with an aqueous solution of a base, or an aqueous solution of an acid with an aqueous solution of a basic aluminium compound.

4. A process according to claim 3, wherein the acid aluminium salt is selected from the group consisting of aluminium sulphate, aluminium nitrate and aluminium chloride, and the basic aluminium compound is selected from the group consisting of sodium aluminate and potassium aluminate.

5. A process according to any one of claims 1-4, wherein step a) is carried out in the presence of a phosphorus-containing compound.

6. A process according to claim 5, wherein the amount of the phosphorus-containing compound in step a) is from 0.06 to 0.30 moles of phosphorus per mole of aluminium.

7. A process according to any one of claims 1-6, wherein step a) is carried out at a pH in the range between 5.5 and 10.0.

8. A process according to any one of claims 1-7, wherein step a) is carried out at a temperature between 20°C and 90°C.

9. A process according to any one of claims 1-8, wherein step b) is carried out at a pH in the range between 9.0 and 11.0.

10. A process according to any one of claims 1-9, wherein the metal compounds in step d) are used solubilized in one or more solutions and/or in the form of dry, water-soluble salts.

11. A process according to claim 10, wherein nickel, cobalt, dimolybdate and/or molybdate salts are used.

12. A process according to any one of claims 1-11, wherein step d) is carried out in the presence of a phosphorus-containing compound in an amount of from 0.2 to 1.5 moles of phosphorus per mole of the heavy metal concerned.

13. A process according to claim 12, wherein the phosphorus-containing compound in step d) is phosphoric acid.

14. A process according to any one of claims 1-13, wherein step d) is carried out at a pH in the range between 4.0 and 8.0.

15. A process according to any one of claims 1-14, wherein step d) is carried out in such a way as to give a final catalyst having from 2.5%w to 4%w of nickel and/or cobalt and from 8%w to 18%w molybdenum or 10%w to 32%w tungsten, or having from 8%w to 32%w molybdenum and tungsten.

16. A process according to any one of claims 1-15, wherein the product of step d) is partially dried to reduce loss on ignition to between 55% and 65%.

17. A process according to any one of claims 1-16, wherein the product of step e) is passed through a mixing means to peptise the gel, before being extruded in step f).

18. A catalyst which comprises a catalytically effective amount of cobalt and/or nickel and a catalytically effective amount of a heavy metal selected from the group consisting of molybdenum, tungsten or mixtures thereof, on an alumina support, said catalyst having a surface area greater than 300 m²/g and at least 20% of its pore volume in pores having diameters greater than 35 nm and at least 20% of its pore volume in pores having diameters less than 7 nm, wherein said catalyst is prepared by a process according to any one of claims 1-17.

19. A process for hydrotreating hydrocarbon-containing feeds using a catalyst which has been prepared by the process according to any one of claims 1-17.

**Patentansprüche**

1. Verfahren zur Herstellung von hochaktiven Hydroraffinationskatalysatoren mit Oberflächen von wenigstens 300 m²/g, wenigstens 20% des Porenvolumens in Poren mit Durchmessern von größer als 35 nm und wenigstens 20% des Porenvolumens in Poren mit Durchmessern unter 7 nm, welches Verfahren die folgenden Stufen umfaßt :

(a)   Titrieren einer wäßrigen Lösung eines oder mehrerer Aluminiumsalze mit einem Titrationsmittel unter Ausfällung eines Niederschlages,

(b)   Altern des Niederschlages bei einer Temperatur von 20°C bis 90°C während wenigstens 15 Minuten bei einem pH-Wert im Bereich von 8,0 bis 12,0,

(c)   Waschen des Niederschlages,

(d)   Mischen des Niederschlages mit einer oder mehrerer Verbindungen eines Elementes, ausgewählt aus der aus Nickel, Kobalt und deren Gemischen bestehenden Gruppe, und eines Schwermetalles, ausgewählt aus der aus Molybdän, Wolfram und deren Gemischen bestehenden Gruppe, bei einem pH-Wert im Bereich von 4,0 bis 9,0 und bei einer Temperatur im Bereich von 25°C bis 100°C, bis eine ausreichende Adsorption der Verbindungen an das Gel erreicht ist, um einen Endkatalysator mit einem Gehalt an 1 bis 5 Gew.-% Kobalt und/oder Nickel und an 8 bis 32 Gew.-% Schwermetall zu ergeben,

(e)   partielles Trocknen des Produktes aus Stufe (d) zur Verminderung des Glühverlustes auf 50 bis 70%,

(f)   Extrudieren des Produktes aus Stufe (e) und

(g)   Trocknen und Calcinieren des Produktes aus Stufe (f) bei einer von 300 bis 900°C reichenden Temperatur.

2. Verfahren nach Anspruch 1, worin die Stufe (a) die Ausbildung eines Niederschlages durch Ausfällen einer wäßrigen Lösung eines oder mehrerer Aluminiumsalze durch Einstellen des pH-Werts der Lösung umfaßt.

3. Verfahren nach Anspruch 1, worin Stufe (a) die Ausbildung eine Niederschlages durch Titrieren entweder einer wäßrigen Lösung eines sauren Aluminiumsalzes mit einer wäßrigen Lösung einer basischen Aluminiumverbindung oder mit einer wäßrigen Lösung einer Base oder einer wäßrigen Lösung einer Säure mit einer wäßrigen Lösung einer Basischen Aluminiumverbindung umfaßt.

4. Verfahren nach Anspruch 3, worin das saure Aluminiumsalze aus der aus Aluminiumsulfat, Aluminiumnitrat und Aluminiumchlorid bestehenden Gruppe ausgewählt wird und die basische Aluminiumverbindung aus der aus Natriumaluminat und Kaliumaluminat bestehenden Gruppe ausgewählt wird.

5. Verfahren nach einem der Ansprüche 1 bis 4, worin Stufe (a) in Gegenwart einer phosphorhältigen Verbindung ausgeführt wird.

6. Verfahren nach Anspruch 5, worin die Menge der phosphorhältigen Verbindung in Stufe (a) von 0,06 bis 0,30 Mol Phosphor je Mol Aluminium beträgt.

7. Verfahren nach einem der Ansprüche 1 bis 6, worin Stufe (a) bei einem pH-Wert im Bereich von 5,5 bis 10,0 ausgeführt wird.

8. Verfahren nach einem der Ansprüche 1 bis 7, worin Stufe (a) bei einer Temperatur von 20°C bis 90°C ausgeführt wird.

9. Verfahren nach einem der Ansprüche 1 bis 8, worin Stufe (b) bei einem pH-Wert im Bereich von 9,0 bis 11,0 ausgeführt wird.

10. Verfahren nach einem der Ansprüche 1 bis 9, worin die Metallverbindungen in Stufe (d) in gelöster Form in einer oder mehreren Lösungen und/oder in Form von trockenen wasserlöslichen Salzen verwendet werden.

11. Verfahren nach Anspruch 10, worin Nickel-, Kobalt-, Dimolybdat- und/oder Molybdatsalze verwendet werden.

12. Verfahren nach einem der Ansprüche 1 bis 11, worin Stufe (d) in Gegenwart einer phosphorhältigen

18

Verbindung in einer Menge von 0,2 bis 1,5 Mol Phosphor je Mol des entsprechenden Schwermetalles ausgeführt wird.

13. Verfahren nach Anspruch 12, worin die phosphorhältige Verbindung in Stufe (d) Phosphorsäure ist.

14. Verfahren nach einem der Ansprüche 1 bis 13, worin Stufe d) bei einem pH-Wert im Bereich von 4,0 bis 8,0 ausgeführt wird.

15. Verfahren nach einem der Ansprüche 1 bis 14, worin Stufe d) in solcher Weise ausgeführt wird, daß ein Endkatalysator mit 2,5 bis 4 Gew-% Nickel und/oder Kobalt und 8 bis 18 Gew.-% Molybdän oder 10 bis 32 Gew.-% Wolfram oder 8 bis 32 Gew-% Molybdän und Wolfram erhalten wird.

16. Verfahren nach einem der Ansprüche 1 bis 15, worin das Produkt in Stufe (d) partiell getrocknet wird, um den Glühverlust auf 55 bis 65% zu vermindern.

17. Verfahren nach einem der Ansprüche 1 bis 16, worin das Produkt aus Stufe d) durch eine Mischvorrichtung zum Peptisieren des Gels geführt wird, bevor es in Stufe (f) extrudiert wird.

18. Ein Katalysator, der eine katalytisch wirksame Menge Kobalt und/oder Nickel und eine katalytisch wirksame Menge eines Schwermetalls, ausgewählt aus der aus Molybdän, Wolfram und deren Gemischen bestehenden Gruppe, auf einem Aluminiumoxidträger umfaßt, welcher Katalysator eine Oberfläche von über 300 m²/g und wenigstens 20% seines Porenvolumens in Poren mit Durchmessern von größer als 35 nm und wenigstens 20% seines Porenvolumens in Poren mit Durchmessern kleiner als 7 nm aufweist, welcher Katalysator nach einem Verfahren gemäß einem der Ansprüche 1 bis 17 hergestellt ist.

19. Verfahren zur Hydroraffination von Kohlenwasserstoff-enthaltenden Einsatzmaterialen unter Verwendung eines Katalysators, der nach dem Verfahren gemäß einem der Ansprüche 1 bis 17 hergestellt worden ist.

## Revendications

1. Procédé de préparation de catalyseurs d'hydrotraitement très actifs, ayant des surfaces spécifiques d'au moins 300 m²/g, au moins 20% du volume des pores étant constitués par des pores d'un diamètre supérieur à 35 nm, et au moins 20% du volume des pores étant constitués par des pores d'un diamètre inférieur à 7 nm, selon lequel :

(a)     on titre une solution aqueuse d'au moins un sel d'aluminium, avec un agent de titrage, de façon à former un précipité,

(b)     on vieillit le précipité à une température de 20°C à 90°C pendant au moins 15 minutes, à un pH de 8,0 à 12,0,

(c)     on lave le précipité,

(d)     on mélange le précipité avec au moins un composé dérivé d'un élément choisi parmi le nickel, le cobalt et les mélanges de ceux-ci, et d'un métal lourd choisi parmi le molybdène, le tungstène et les mélanges de ceux-ci, à un pH de 4,0 à 9,0 et une température de 25°C à 100°C, jusqu'à ce que l'adsorption des composés dans le gel, soit suffisante pour procurer un catalyseur final comportant de 1% en poids à 5% en poids de cobalt et/ou de nickel, et de 8% en poids à 32% en poids de métal lourd,

(e)     on sèche partiellement le produit de l'étape (d) pour réduire les pertes par calcination à 50% jusqu'à 70%,

(f)     on extrude le produit de l'étape (e), et

(g)     on sèche et on calcine les produits de l'étape (f) à une température de 300°C à 900°C.

2. Procédé selon la revendication 1, dans lequel l'étape (a) comprend la formation d'un précipité par précipitation d'une solution aqueuse d'au moins un sel d'aluminium, en ajustant le pH de la solution.

3. Procédé selon la revendication 1, dans lequel l'étape (a) comprend la formation d'un précipité par titrage d'une solution aqueuse d'un sel acide d'aluminium avec une solution aqueuse d'un composé basique dérivé de l'aluminium ou avec une solution aqueuse d'une base, ou d'une solution aqueuse d'un acide avec une solution aqueuse d'un composé basique dérivé de l'aluminium.

4. Procédé selon la revendication 3, dans lequel le sel acide dérivé de l'aluminium est choisi parmi un sulfate d'aluminium, le nitrate d'aluminium et le chlorure d'aluminium, et dans lequel le composé basique dérivé de l'aluminium est choisi parmi l'aluminate de sodium et l'aluminate de potassium.

5. Procédé selon l'une quelconque des revendications 1 à 4, dans lequel l'étape (a) est effectuée en présence d'un composé phosphoré.

6. Procédé selon la revendication 5, dans lequel la quantité du composé phosphoré dans l'étape (a), est de 0,06 à 0,30 mole de phosphore par mole d'aluminium.

19

7. Procédé selon l'une quelconque des revendications 1 à 6, dans lequel l'étape (a) est effectuée à un pH de 5,5 à 10,0.

8. Procédé selon l'une quelconque des revendications 1 à 7, dans lequel l'étape (a) est effectuée à une température de 20°C à 90°C.

9. Procédé selon l'une quelconque des revendications 1 à 8, dans lequel l'étape (b) est effectuée à un pH de 9,0 à 11,0.

10. Procédé selon l'une quelconque des revendications 1 à 9, dans lequel les composés dérivés de métal mis en oeuvre dans l'étape (d), sont employés à l'état dissous dans au moins une solution et/ou sous la forme de sels secs solubles dans l'eau.

11. Procédé selon la revendication 10, dans lequel on emploie un sel de nickel, un sel de cobalt, un dimolybdate et/ou un molybdate.

12. Procédé selon l'une quelconque des revendications 1 à 11, dans lequel l'étape (d) est effectuée en présence d'un composé phosphoré, selon une quantité de 0,2 à 1,5 moles de phosphore par mole du métal lourd concerné.

13. Procédé selon la revendication 12, dans lequel le composé phosphoré mis en oeuvre dans l'étape (d), est l'acide phosphorique.

14. Procédé selon l'une quelconque des revendications 1 à 13, dans lequel l'étape (d) est effectuée à un pH de 4,0 à 8,0.

15. Procédé selon l'une quelconque des revendications 1 à 14, dans lequel l'étape (d) est effectuée de façon à obtenir un catalyseur final comprenant de 2,5% en poids à 4% en poids de nickel et/ou de cobalt, et de 8% en poids à 18% en poids de molybdène, ou de 10% en poids à 32% en poids de tungstène, ou comprenant de 8% en poids à 32% en poids de molybdène et de tungstène.

16. Procédé selon l'une quelconque des revendications 1 à 15, dans lequel le produit de l'étape (d), est partiellement séché pour réduire les pertes par calcination, à 55% jusqu'à 65%.

17. Procédé selon l'une quelconque des revendications 1 à 16, dans lequel le produit de l'étape (e) est traité dans un dispositif de mélange afin de peptiser le gel avant de l'extruder dans l'étape (f).

18. Catalyseur comprenant une quantité à effet catalytique de cobalt et/ou de nickel, et une quantité à effet catalytique d'un métal lourd choisi parmi le molybdène, le tungstène et des mélanges de ceux-ci, sur un support d'alumine, ce catalyseur ayant une surface spécifique supérieure à 300 m$^2$/g, au moins 20% du volume de ses pores étant constitués par des pores d'un diamètre supérieur à 35 nm, et au moins 20% du volume de ses pores étant constitués par des pores d'un diamètre inférieur à 7 nm ; ce catalyseur étant préparé en mettant en oeuvre un procédé selon l'une quelconque des revendications 1 à 17.

19. Procédé de traitement par l'hydrogène de charges de départ hydrocarbonées, en employant un catalyseur qui a été préparé en mettant en oeuvre le procédé selon l'une quelconque des revendications 1 à 17.